# FASCICULE DE BREVET EUROPEEN

(11) **EP 3 367 765 B1**
(45) Date de publication et mention de la délivrance du brevet: **14.08.2019**
(21) Numéro de dépôt: 18156620.9
(22) Date de dépôt: 14.02.2018
(51) Int. Cl.: H05K 5/02, B60R 16/023, H01H 85/20, H05K 5/06

(54) **PROCEDE DE FABRICATION D'UNE BOÎTE DE PROTECTION POUR FUSIBLES ET/OU RELAIS ELECTRIQUES**
HERSTELLUNGSVERFAHREN EINES SCHUTZKASTENS FÜR SICHERUNGEN UND/ODER ELEKTRISCHE RELAIS
MANUFACTURING METHOD OF A PROTECTION BOX FOR FUSES AND/OR ELECTRICAL RELAYS

(30) Priorité: 28.02.2017 FR 1751632
(43) Date de publication de la demande: 29.08.2018
(73) Titulaire: RENAULT s.a.s., 92100 Boulogne-Billancourt (FR)
(72) Inventeur: GUIGNARD, Fabrice, 78280 Guyancourt (FR); BARROSO, Inaki, 78280 Guyancourt (FR)

(56) Documents cités:
- US-A1- 2014 154 897
- US-A1- 2015 171 608

## Description

La présente invention concerne un procédé de fabrication d'une boîte de protection pour fusibles et/ou relais électriques d'un véhicule automobile. L'invention concerne également une telle boîte de protection ainsi que son agencement dans un compartiment moteur d'un véhicule automobile. Enfin, l'invention concerne également un véhicule automobile équipé d'une telle boîte de protection.

Les fusibles et/ou les relais électriques ou autres pièces électriques d'un véhicule automobile sont généralement regroupés dans une même boîte de protection. Cette boîte est accessible à un utilisateur ou à un garagiste de manière à réaliser, si besoin, une opération de maintenance telle que le remplacement d'un fusible. A cet effet, la boîte de protection contenant les fusibles et/ou les relais électriques ou autres pièces électriques est généralement accessible depuis l'habitacle ou le compartiment moteur du véhicule et comprend un couvercle amovible. En outre cette boîte protège les fusibles et/ou les relais électriques ou autres pièces électriques qu'elle contient des chocs et des projections liquides ou solides.

Le document US2015/0171608A1 divulgue un boîtier étanche et une boîte de protection pour fusibles et/ou relais électriques, à volume fixe comportant une embase creuse fermée en partie supérieure par un couvercle. Une ouverture dans une paroi périphérique de l'embase, est fermée par un couvercle latéral.

Le document US2014/0154897A1 divulgue aussi une boîte de protection pour fusibles et/ou relais électriques, à volume fixe, comportant une embase creuse fermée en partie supérieure par un couvercle. Une ouverture latérale permettant le passage d'un connecteur, est obturée par une plaque.

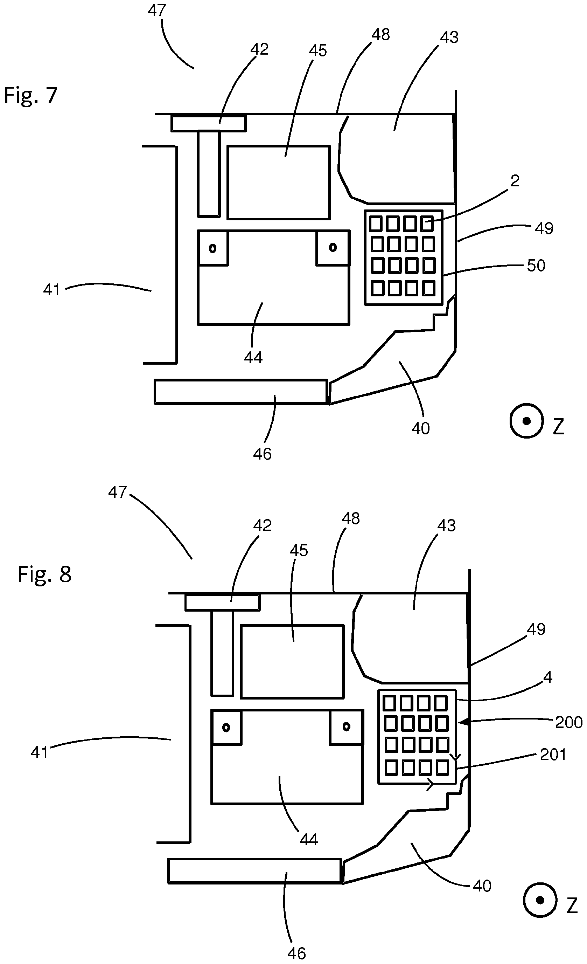

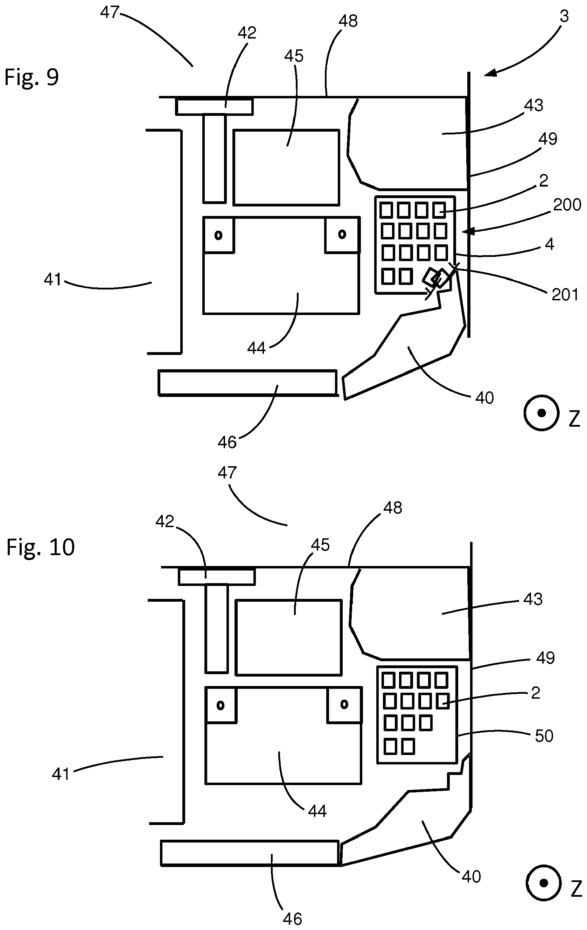

Les véhicules automobiles comprennent de plus en plus d'équipements de série ou en option nécessitant l'utilisation d'un fusible et/ou d'un relai électrique. Pour répondre à ce besoin, il est connu d'utiliser une boîte de protection dont les dimensions correspondent à la quantité maximale de fusibles et/ relais électrique que peut contenir un véhicule. Un exemple d'une telle boîte 50 est représenté sur les figures 7 et 10. L'exemple de la figure 7 montre une boîte de protection 50 avec un remplissage complet. L'exemple de la figure 10 montre cette même boîte de protection 50 avec un remplissage partiel de fusibles et/ou relais électriques. En cas de choc contre le véhicule entrainant un déplacement des organes environnant la boîte de protection, cette dernière peut être facilement détruite. La boîte de protection doit alors être remplacée ce qui génère des coûts importants.

Un premier objet de l'invention est un procédé de fabrication d'une boîte de protection remédiant aux inconvénients ci-dessus et permettant le montage d'un maximum de fusibles et/ou relais électriques dans l'espace disponible d'un compartiment moteur.

Un second objet de l'invention est de fournir une boîte de protection offrant une protection efficace des fusibles et/ou relais électriques ou autres pièces électriques contre les projections liquides ou solides pouvant apparaitre dans un compartiment moteur.

Un troisième objet de l'invention est de fournir un agencement d'une boîte de protection optimisant la préservation de la boîte de protection en cas de choc contre le véhicule.

L'invention se rapporte à un procédé de fabrication d'une boîte de protection pour fusibles et/ou relais électriques ou autres pièces électriques d'un véhicule automobile comprenant :
- une étape de fourniture d'une embase comprenant un ensemble de parois, une ouverture principale, et une ouverture auxiliaire dans un plan sensiblement perpendiculaire à celui de l'ouverture principale ;
- une étape de sélection d'un élément de fermeture comportant des parois d'épaisseur plus faible qu'une épaisseur des parois de l'embase, ou comportant des encoches, de manière à présenter une résistance mécanique plus faible que l'embase, l'élément de fermeture étant sélectionné parmi au moins un premier élément de fermeture et un deuxième élément de fermeture, le premier élément de fermeture étant apte à obturer l'ouverture auxiliaire pour former avec l'embase une première boîte de protection pour fusibles et/ou relais électriques ou autres pièces électriques, le deuxième élément de fermeture étant apte à obturer l'ouverture auxiliaire pour former avec l'embase une deuxième boîte de protection pour fusibles et/ou relais électriques ou autres pièces électriques de forme différente de la première boîte de protection ;
- une étape de fixation de l'élément de fermeture sélectionné sur l'embase.

L'invention permet ainsi notamment d'obtenir à partir d'une même embase, soit une boîte apte à contenir une première quantité moindre de fusibles ou autres éléments électriques pour un modèle de véhicule avec porte-à-faux avant court en fixant un élément de fermeture sans volume, soit une boîte apte à contenir une deuxième quantité plus élevée de fusibles pour un modèle de véhicule avec porte-à-faux avant plus long en fixant un élément de fermeture présentant un volume suffisant pour contenir des fusibles ou autres éléments électriques supplémentaires.

Le procédé de fabrication d'une boîte de protection peut comprendre :
- une étape de fabrication du premier élément de fermeture, et
- une étape de fabrication du deuxième élément de fermeture.
L'embase peut comprendre un premier élément d'un premier moyen de fixation et, éventuellement, un premier élément d'un deuxième moyen de fixation.

Le premier élément de fermeture peut comprendre un deuxième élément du premier moyen de fixation apte à coopérer avec le premier élément du premier moyen de fixation.

Le deuxième élément de fermeture peut comprendre un troisième élément du premier moyen de fixation apte à coopérer avec le premier élément du premier moyen de fixation et/ou éventuellement un deuxième élément du deuxième moyen de fixation apte à coopérer avec le premier élément du deuxième moyen de fixation.

L'étape de fixation peut comprendre la fixation de l'élément de fermeture sélectionné sur l'embase au moyen du premier moyen de fixation et/ou éventuellement du deuxième moyen de fixation.

L'invention se rapporte également à une boîte de protection pour fusibles et/ou relais électriques ou autres pièces électriques d'un véhicule automobile obtenue par un procédé de fabrication tel que défini précédemment.

La boîte de protection comprend :
- un ensemble de parois formant une embase, l'embase étant formée d'une partie contenante munie d'une ouverture principale permettant d'accéder aux fusibles et/ou relais électrique ou autres pièces électriques et d'un couvercle apte à obturer l'ouverture principale, l'embase étant munie d'une ouverture auxiliaire et d'un premier élément d'un premier moyen de fixation,
- un élément de fermeture muni d'un deuxième élément du premier moyen de fixation coopérant avec le premier élément du premier moyen de fixation pour obturer l'ouverture auxiliaire et comportant des parois d'épaisseur plus faible qu'une épaisseur des parois de l'embase, ou comportant des encoches, de manière à présenter une résistance mécanique plus faible que l'embase.

Le premier moyen de fixation peut comprendre :
- au moins un clip de fixation pour fixer l'élément de fermeture sur l'embase, notamment l'embase comprenant un premier élément du clip de fixation et l'élément de fermeture comprenant un deuxième élément du clip de fixation ; et/ou
- au moins une chicane composée d'un bord sur l'embase ou respectivement sur l'élément de fermeture coopérant avec une rainure disposée sur l'élément de fixation, respectivement sur l'embase.

L'embase peut comprendre un premier élément d'un deuxième moyen de fixation apte à coopérer avec un deuxième élément du deuxième moyen de fixation disposé sur un deuxième élément de fermeture.

La boîte de protection peut comprendre un moyen de protection contre des projections extérieures disposé à une jointure entre l'embase et l'élément de fermeture, notamment l'embase peut comprendre une rainure à l'intérieur de laquelle est inséré un bord de l'élément de fermeture pour former une chicane et/ou l'élément de fermeture peut comprendre une rainure à l'intérieur de laquelle est inséré un rebord coudé de l'embase pour former une chicane.

L'élément de fermeture peut comprendre deux parties distinctes, notamment une première partie comprenant une rainure et une deuxième partie comprenant un bord inséré dans la rainure de la première partie pour former une chicane.

L'élément de fermeture peut comprendre, sur une face tournée vers l'intérieur de la boîte de protection, au moins un logement pour fixer une platine de fusible, notamment au moins un logement en forme de queue d'aronde.

L'élément de fermeture a une résistance mécanique plus faible que l'embase, notamment l'épaisseur des parois de l'élément de fermeture peut être plus faible que l'épaisseur des parois de l'embase.

L'invention se rapporte également à un agencement d'un compartiment moteur à l'avant d'un véhicule automobile comprenant une boîte de protection telle que définie précédemment et un organe, notamment un phare, disposé à l'avant de la boîte de protection, le premier élément de fermeture étant disposé sensiblement selon un plan vertical et d'un côté de la boîte de protection faisant face à l'organe.

L'invention se rapporte également à un véhicule automobile comprenant une boîte de protection telle que définie précédemment ou un agencement d'un compartiment moteur tel que défini précédemment.

Ces objets, caractéristiques et avantages de la présente invention seront exposés en détail dans la description suivante de deux modes de réalisation particuliers faits à titre non-limitatif en relation avec les figures jointes parmi lesquelles :
- La figure 1 est une vue en perspective d'une première boîte de protection selon un premier mode de réalisation de l'invention.
- La figure 2 est une vue en perspective d'une deuxième boîte de protection selon un deuxième mode de réalisation de l'invention.
- La figure 3 est une vue schématique d'un premier élément de fermeture.
- La figure 4 est une vue schématique d'un deuxième élément de fermeture.
- La figure 5 est une vue en coupe partielle de la première boîte de protection.
- La figure 6 est une vue en coupe partielle de la deuxième boîte de protection.
- La figure 7 est une représentation schématique d'un compartiment moteur muni d'une boîte de protection selon l'état de l'art.
- La figure 8 est une représentation schématique d'un compartiment moteur muni de la deuxième boîte de protection.
- La figure 9 est une représentation schématique d'un compartiment moteur muni de la deuxième boîte de protection consécutivement à un choc contre un phare du véhicule.
- La figure 10 est une représentation schématique d'un compartiment moteur muni de la boîte de protection selon l'état de l'art.
- La figure 11 est une représentation schématique d'un compartiment moteur muni de la première boîte de protection.
- La figure 12 est une représentation schématique d'un compartiment moteur muni de la première boîte de protection consécutivement à un choc contre un phare du véhicule.
- La figure 13 est une représentation schématique des étapes d'un procédé de fabrication d'une boîte de protection selon l'invention.

Sur l'ensemble des figures et de la description, on considère que le véhicule repose sur un sol horizontal. Un axe vertical Z est perpendiculaire au plan horizontal et orienté de bas en haut. L'avant et l'arrière sont définis par la direction du véhicule se déplaçant en ligne droite et en marche avant. Un axe transversal est un axe perpendiculaire à l'axe vertical Z. Un plan latéral est un plan comprenant un axe parallèle à l'axe vertical Z. Un plan horizontal est un plan perpendiculaire à l'axe vertical Z. Un élément « supérieur » désigne un élément disposé vers le haut et un élément « inférieur » désigne un élément disposé vers le bas. Les termes ainsi définis seront aussi utilisés pour une boîte de protection considérée hors d'un véhicule puisqu'elle est destinée à un montage selon une orientation spécifique dans un véhicule.

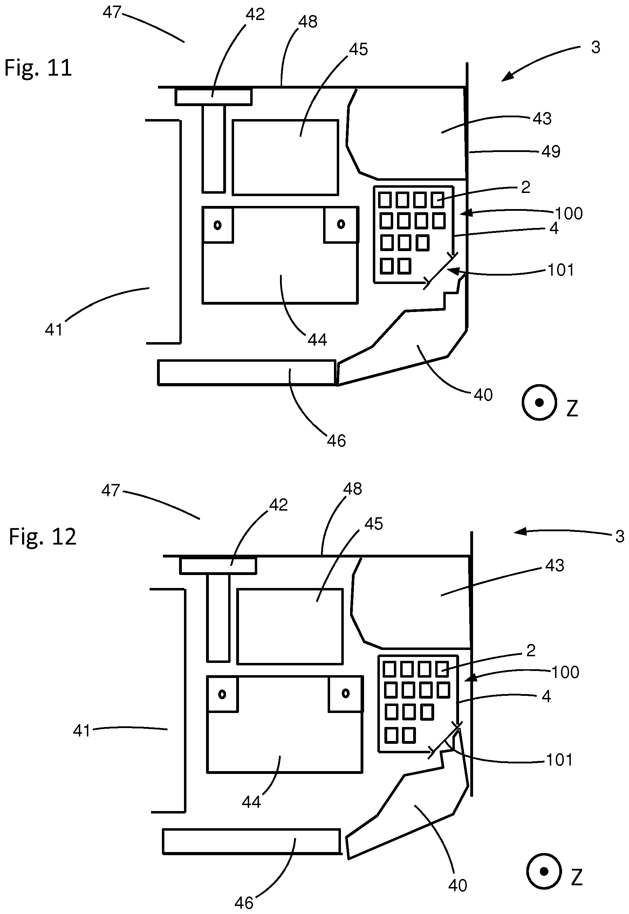

Comme illustré sur les figures 8 et 11, un véhicule automobile 1 comprend un compartiment moteur dans lequel sont positionnés différents organes du véhicule comme par exemple un phare 40, un groupe motopropulseur 41, un élément d'un système de freinage 42, un amortisseur 43, une batterie 44, un filtre 45 ou encore une face avant 46. Selon le mode de réalisation illustré, le compartiment moteur est disposé à l'avant du véhicule. Le compartiment moteur est délimité notamment par un tablier 48 formant une cloison de séparation avec un habitacle 47 et par une aile latérale 49. Le compartiment moteur comprend également une boîte de protection 100, 200 pour fusibles et/ou relais électriques ou autres pièces électriques. La boîte de protection est positionnée entre l'aile latérale 49, l'amortisseur 43, la batterie 44 et le phare 40. La boîte de protection est disposée dans une partie supérieure du compartiment moteur, c'est-à-dire une partie directement accessible lorsqu'on lève un capot du véhicule. En variante la boîte de protection 100, 200 pourrait être environnée d'autres organes ou être disposée dans toute autre partie du véhicule, notamment dans un compartiment moteur situé à l'arrière du véhicule ou dans l'habitacle.

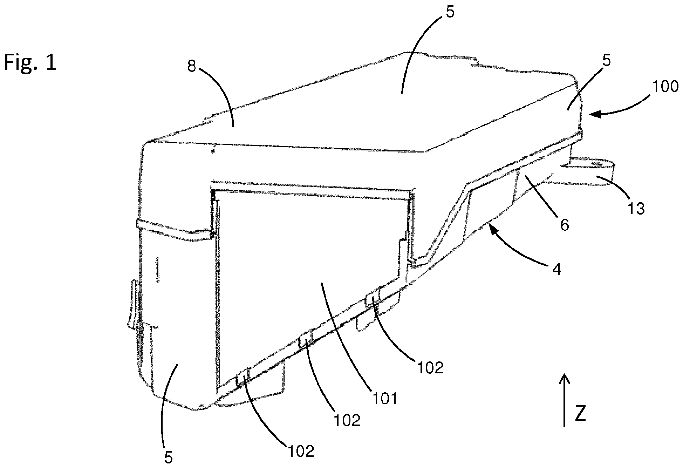

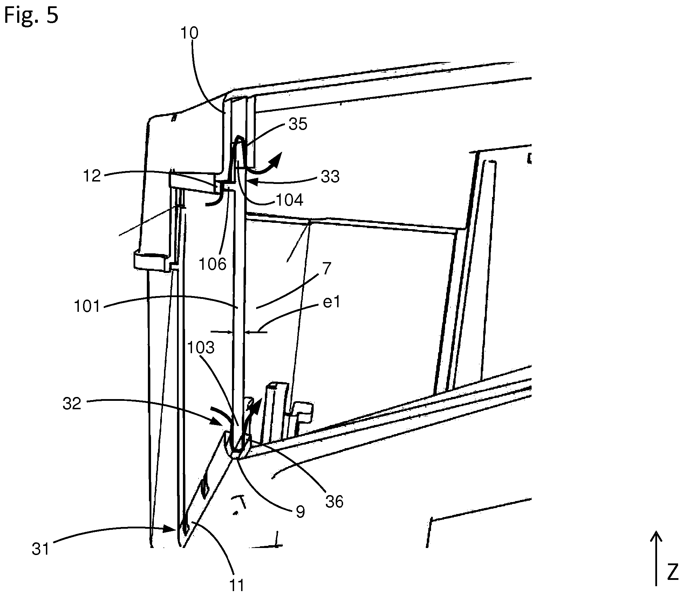

La figure 1 et la figure 5 illustrent un mode de réalisation d'une première boîte de protection 100 selon l'invention. La première boîte de protection 100 enveloppe un ensemble de fusibles et/ou relais électriques ou autres pièces électriques 2. Les fusibles sont des composants de protection électrique de différents organes du véhicule. Les relais électriques sont des interrupteurs pilotant l'alimentation électrique de différents organes du véhicule. Les fusibles et/ou les relais électriques peuvent s'endommager au cours de l'utilisation du véhicule et leur remplacement est alors nécessaire. La première boîte de protection 100 peut également contenir d'autres composants électriques pour lesquels un accès pour maintenance doit être possible. Les fusibles et/ou les relais électriques ou autres pièces électriques 2 sont agencés sur une platine et sont connectés électriquement à différents organes du véhicule, notamment à la batterie 44 du véhicule. Selon le mode de réalisation présenté, la première boîte de protection 100 a une forme globalement rectangulaire et est constituée d'un ensemble de parois 5 de forme sensiblement plane. Les parois 5 peuvent également comprendre des reliefs pour accroitre leur rigidité et/ou pour s'adapter au logement dans lequel la boîte de protection est insérée. On peut distinguer plusieurs faces sur la première boîte de protection 100 particulièrement visibles sur la figure 1. Une face supérieure est disposée horizontalement en haut de la boîte et des faces latérales sont disposées sur des côtés de la boîte. Une face inférieure est disposée de manière sensiblement inclinée par rapport au plan horizontal. En variante la première boîte de protection 100 pourrait avoir une toute autre forme et/ou comprendre des parois de forme courbe.

La première boîte de protection comprend une partie contenante 6 munie d'une ouverture principale orientée vers le haut et un couvercle 8 obturant cette ouverture principale. Le couvercle 8 comprend des rebords latéraux recouvrant des parois latérales de la partie contenante 6. Le couvercle peut être amovible, c'est-à-dire qu'il peut être enlevé et remis en place par exemple à l'occasion d'une opération de maintenance et/ou d'une réparation et/ou de l'installation d'un nouvel équipement dans le véhicule. La première boîte de protection 100 est positionnée dans le compartiment moteur de manière à ce que le couvercle 8 soit aisément accessible. En variante, l'ouverture principale pourrait également être disposée sur une face latérale de la boîte de protection. Dans une telle éventualité, la description qui va suivre pourra être transposée.

La partie contenante 6 comprend une patte de fixation 13 s'étendant depuis une des parois latérales. La patte de fixation 13 est destinée à fixer la boîte sur une caisse du véhicule ou un support. En variante la fixation de la boîte sur la caisse pourrait ne pas nécessiter l'utilisation de cette patte de fixation et être réalisée par tout autre moyen de fixation, comme par exemple un encastrement.

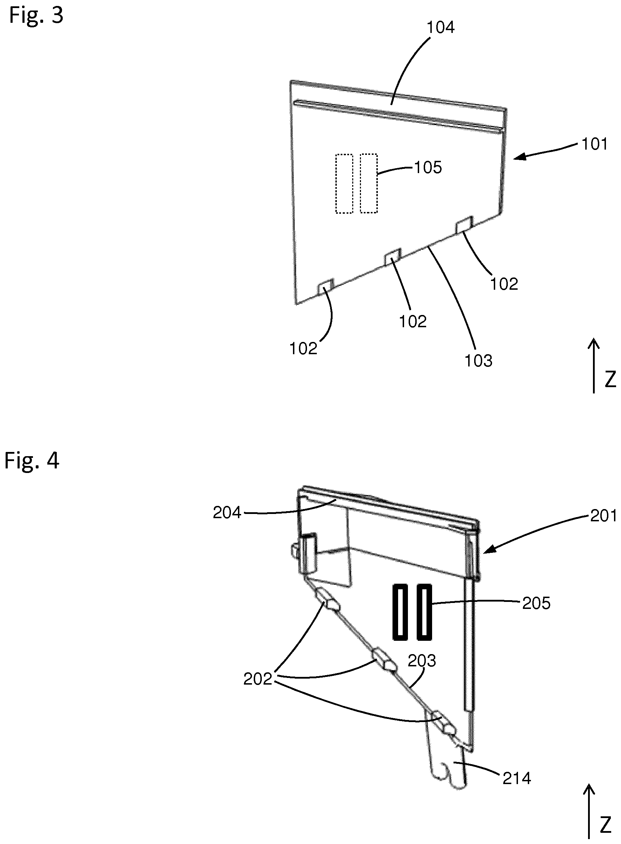

La partie contenante 6 et le couvercle 8 forment ensemble une embase 4 de la boîte de protection 100. L'embase ainsi formée comprend une ouverture auxiliaire 7. L'ouverture auxiliaire 7 est positionnée sur une face latérale de la boîte de protection 100 et a une forme globalement trapézoïdale. L'ouverture auxiliaire 7 est disposée dans un plan sensiblement perpendiculaire à un plan de l'ouverture principale. L'ouverture auxiliaire 7 comprend au moins un bord commun avec la partie contenante 6 et au moins un bord commun avec le couvercle 8. En variante l'ouverture auxiliaire 7 pourrait être intégralement réalisée dans la partie contenante 6 ou dans le couvercle 8. L'ouverture auxiliaire 7 est obturée par un premier élément de fermeture 101 illustré sur la figure 3. Le premier élément de fermeture a une forme globalement plane et trapézoïdale. Ses dimensions correspondent globalement aux dimensions de l'ouverture auxiliaire 7. L'ensemble formé par l'embase et le premier élément de fermeture forme la première boîte de protection 100. Cette première boîte de protection enveloppe les fusibles et/ou relais électriques ou autres pièces électriques par tous les côtés.

Le premier élément de fermeture 101 est fixé à l'embase 4 par deux ou trois moyens de fixation 31, 32, 33. En variante un seul moyen de fixation pourrait être utilisé toutefois l'utilisation conjointe de trois moyens de fixation améliore la rigidité de la boîte de protection 100. Chaque moyen de fixation comprend au moins un premier élément disposé sur l'embase 4 coopérant avec au moins un deuxième élément disposé sur le premier élément de fermeture 101. Un bord inférieur 103 de l'élément de fermeture 101 est fixé à l'embase 4 par la combinaison de deux moyens de fixation 31, 32 particulièrement visibles sur la figure 5 :
- D'une part, un premier moyen de fixation 31 comprend un clip de fixation. L'embase 4 comprend trois premiers éléments 11 d'un clip de fixation coopérant avec trois deuxièmes éléments 102 disposés sur le premier élément de fermeture 101 et complémentaires des trois premiers éléments 11. Les trois premiers éléments 11 du clip de fixation sont positionnés à proximité d'un bord inférieur de l'ouverture auxiliaire. Les trois deuxièmes éléments 102 du clip de fixation sont répartis sur le bord inférieur 103 de l'élément de fermeture 101. Les clips de fixation permettent de fixer l'élément de fermeture sur l'embase et en particulier permettent d'empêcher un glissement relatif de l'élément de fermeture par rapport à l'embase selon un axe transversal.
- D'autre part, un deuxième moyen de fixation comprend une chicane inférieure 32. La chicane inférieure 32 comprend une rainure inférieure 9 réalisée dans l'embase 4, plus particulièrement dans la partie contenante 6 de l'embase 4. La rainure inférieure 9 s'étend selon un axe transversal. La rainure inférieure a une forme de « U » et comprend deux flancs parallèles s'étendant suivant un plan latéral. Un premier flanc est disposé côté intérieur et un deuxième flanc est disposé côté extérieur de la boîte de protection. Le bord inférieur 103 du premier élément de fermeture 101 est inséré dans la rainure inférieure 9 entre les deux flancs. Le flanc du côté extérieur comprend les trois premiers éléments 11 du clip de fixation. La chicane inférieure 32 permet d'empêcher un déplacement relatif du bord inférieur 103 par rapport à l'embase 4 selon un axe perpendiculaire au plan latéral des deux flancs de la rainure inférieure 9.
- Un bord supérieur 104 du premier élément de fermeture 101 est fixé à l'embase par un troisième moyen de fixation 33. Ce troisième moyen de fixation est une chicane supérieure. La chicane supérieure 33 comprend une rainure supérieure 10 réalisée dans l'embase, plus particulièrement dans le couvercle 8 de l'embase 4. La rainure supérieure 10 s'étend selon un axe transversal. La rainure supérieure 10 a une forme de « U » à l'envers et comprend deux flancs parallèles s'étendant suivant un plan latéral. Un premier flanc est disposé côté intérieur et un deuxième flanc est disposé côté extérieur de la boîte de protection. Un bord supérieur du premier élément de fermeture est inséré dans la rainure supérieure entre les deux flancs. Ainsi le bord supérieur du premier élément de fermeture 101 est fixé sur l'embase 4. La chicane supérieure 33 permet d'empêcher un déplacement relatif du bord supérieur 104 par rapport à l'embase 4 selon un axe perpendiculaire au plan latéral des deux flancs de la rainure supérieure 10.

En outre, comme cela est particulièrement visible sur la figure 5, un bord inférieur du couvercle 8 comprend un rebord coudé 12. Le rebord coudé 12 est réalisé par deux coudes à 90° formant un décalage des parois latérales du couvercle. Le bord inférieur du couvercle est ainsi décalé vers l'extérieur de la boîte de protection. Le premier élément de fermeture 101 comprend une languette 106 s'étendant selon un axe transversal à hauteur du rebord coudé 12. La languette 106 coopère avec le rebord coudé 12 pour augmenter l'effet de chicanage de la chicane supérieure 33, c'est-à-dire pour rendre plus sinueux le parcours de particules solides ou liquides qui pénétreraient à l'intérieur de la boîte de protection 100.

Grâce aux fixations de ses bords inférieurs et supérieurs, le premier élément de fixation est bloqué en position sur l'embase. Les chicanes inférieures et supérieures 32, 33 remplissent une double fonction de moyen de fixation et de moyen d'étanchéité d'une jointure entre le premier élément de fermeture 101 et l'embase 4. En effet, des particules solides ou liquides projetées contre la première boîte de protection devraient suivre des parcours sinueux représentés par les flèches 35 et 36 pour pénétrer à l'intérieur de la première boîte de protection 100. Des chicanes peuvent également être formées entre les bords latéraux du premier élément de fermeture et l'embase. En variante l'étanchéité entre le premier élément de fermeture 101 et l'embase 4 pourrait être assurée par tout autre moyen comme par exemple l'utilisation d'un joint d'étanchéité.

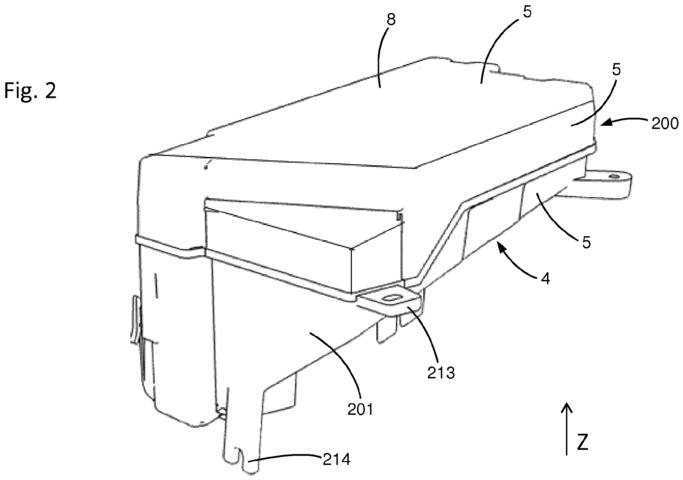

La figure 2 et la figure 5 illustrent un deuxième mode de réalisation d'une boîte de protection 200 selon l'invention. Selon ce deuxième mode de réalisation, la deuxième boîte de protection 200 comprend une embase 4 identique à l'embase 4 de la première boîte de protection 100 décrite dans le premier mode de réalisation. La deuxième boîte de protection comprend par ailleurs un deuxième élément de fermeture 201 remplaçant le premier élément de fermeture 101. Le deuxième élément de fermeture est illustré sur la figure 4. Le deuxième élément de fermeture obture l'ouverture auxiliaire 7. L'ensemble formé par l'embase 4 et le deuxième élément de fermeture 201 forme la deuxième boîte de protection 200. Cette deuxième boîte de protection enveloppe les fusibles et/ou relais électriques. Le deuxième élément de fermeture est réalisé par l'association de plusieurs parois de forme sensiblement planes. Une face extérieure du deuxième élément de fermeture 201 est de forme convexe et une face intérieure deuxième élément de fermeture 201 est de forme concave. Par conséquent, le volume intérieur de la deuxième boîte de protection est plus grand que celui de la première boîte de protection. La forme du deuxième élément de fermeture peut être déterminée en fonction des géométries des organes environnant la boîte de protection, par exemple en épousant le contour de ces organes. Ainsi, le volume de la boîte de protection peut être augmenté.

De la même manière que pour le premier élément de fermeture, un bord inférieur 203 du deuxième élément de fermeture est fixé à l'embase 4 par deux moyens de fixation. D'une part, le deuxième élément de fermeture comprend trois troisièmes éléments 202 de clips de fixation coopérant avec les trois premiers éléments 11 du clip de fixation sur l'embase. Les troisièmes éléments 202 sont complémentaires des trois premiers éléments 11 du clip de fixation. D'autre part, le deuxième élément de fermeture 201 comprend également un bord inférieur 203 coopérant avec la rainure inférieure 9 de l'embase 4 pour réaliser une chicane inférieure. Ainsi, le bord inférieur 203 du deuxième élément de fermeture 201 est fixé à l'embase 4 en utilisant les mêmes premiers éléments de l'embase 4 que pour la fixation du bord inférieur 103 du premier élément de fermeture 101.

Par ailleurs, un bord supérieur du deuxième élément de fermeture 201 est fixé à l'embase 4 par l'intermédiaire d'une chicane supérieure 34. La chicane supérieure 34 comprend le rebord coudé 12 du couvercle 8 coopérant avec une rainure 204 du deuxième élément de fermeture. La rainure 204 est en forme de « U » et comprend deux flancs latéraux. Le rebord coudé 12 du couvercle est inséré entre les deux flancs latéraux. Ainsi, le deuxième élément de fixation est fixé à l'embase par l'intermédiaire de la chicane supérieure 34. La chicane supérieure 34 de la deuxième boîte de protection 200 est différente de la chicane supérieure 33 de la première boîte de protection 100. Ainsi, le rebord coudé 12 du couvercle 8 a une fonction de moyen d'étanchéité lorsqu'il est associé au premier élément de fermeture 101 et une double fonction de moyen de fermeture et de moyen d'étanchéité lorsqu'il est associé au deuxième élément de fermeture 201. En variante, le bord supérieur du deuxième élément de fermeture pourrait également être fixé à l'embase 4 par une chicane de forme identique à la chicane supérieure 33 permettant de fixer le premier élément de fermeture sur l'embase.

Ainsi, le deuxième élément de fermeture peut être fixé à l'embase 4 en utilisant des éléments de moyens de fixation de l'embase utilisés pour fixer le premier élément de fermeture 101, ou au contraire, le deuxième élément de fermeture peut être fixé à l'embase 4 en utilisant des éléments de moyens de fixation de l'embase propres à la fixation du deuxième élément de fermeture 201.

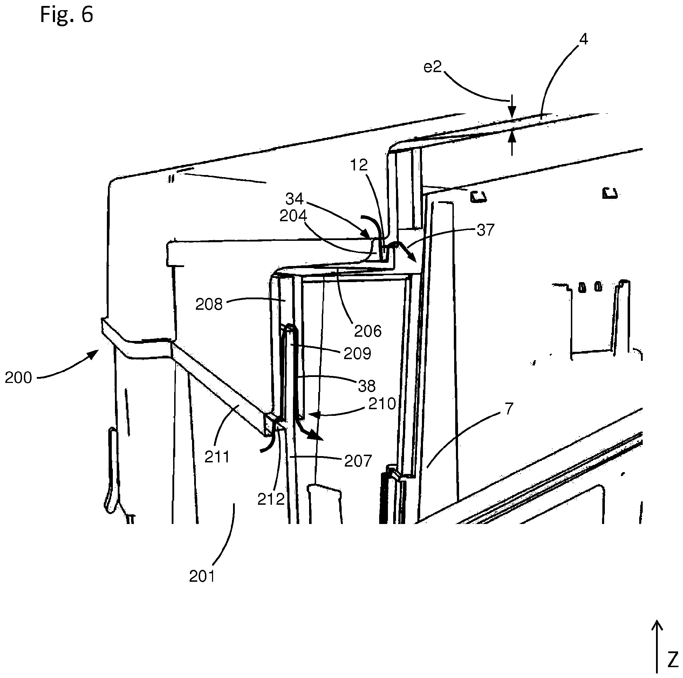

Comme illustré sur la figure 6, le deuxième élément de fermeture 201 comprend deux parties distinctes 206, 207. Une première partie 206 est une partie supérieure et une deuxième partie 207 est une partie contenante du deuxième élément de fermeture. Les deux parties distinctes 206, 207 sont reliées ensemble par une chicane 210. La première partie 206 comprend une rainure 208 en forme de « U » à l'envers délimitée par deux flancs latéraux. Un premier flanc est disposé du coté intérieur et un deuxième flanc est disposé du coté extérieur de la boîte. La deuxième partie 207 comprend un bord 209 inséré dans la rainure 208, entre les deux flancs de la première partie 206. En outre, la première partie 206 comprend également un rebord coudé 211 coopérant avec une languette 212 de la deuxième partie pour augmenter l'effet de chicanage de la chicane 210. Des particules solides ou liquides projetées contre la deuxième boîte de protection devraient suivre des parcours sinueux représentés par les flèches 37 et 38 pour pénétrer à l'intérieur de la deuxième boîte de protection 200. En variante le deuxième élément de fermeture pourrait être réalisé d'une seule pièce ou par assemblage de trois parties distinctes ou plus.

Le deuxième élément de fermeture 201 comprend deux pattes de fixation 213, 214 participant à la fixation de la boîte de protection 200 sur la caisse du véhicule. Une première patte de fixation 213 disposée horizontalement comprend un trou de fixation et une deuxième patte de fixation 214 disposée verticalement comprend une terminaison en forme de fourche. En variante, le deuxième élément de fermeture pourrait ne pas comporter de patte de fixation et le maintien de la boîte de protection se ferait alors uniquement par l'embase.

Le premier et le deuxième élément de fermeture 101, 201 sont interchangeables sur l'embase 4. Le premier et le deuxième élément de fermeture 101, 201 comprennent, sur une face tournée vers l'intérieur de la boîte de protection chacun deux logements 105, 205 destinés à fixer une ou deux platines de fusible et/ou relais électriques ou autres pièces électriques. Ces logements sont particulièrement visibles sur les figures 3 et 4. En variante, il pourrait s'agir d'un tout autre nombre de logements. Ces logements peuvent être par exemple des logements en forme de queue d'aronde. La ou les platines sont alors insérées verticalement dans la boîte de protection au travers de l'ouverture principale. Des extrémités des platines, dont la forme est complémentaire aux logements 105, 205 coopèrent alors avec les logements pour maintenir les platines en position à l'intérieur de la boîte de protection. En variante, les platines peuvent être également ou exclusivement fixées à l'embase 4.

Les éléments de fermeture 101, 201 sont dimensionnés de sorte à avoir une résistance mécanique plus faible que celle de l'embase 4. Par exemple, une épaisseur e1 des parois du premier et/ou du deuxième l'élément de fermeture 101, 201 est plus faible qu'une épaisseur e2 des parois 5 de l'embase 4. En variante, une résistance mécanique moindre des éléments de fermeture 101, 201 pourrait également être obtenue en disposant des encoches dans les éléments de fermeture. En cas de choc contre l'élément de fermeture 101, 201, ce dernier pourrait casser au niveau des encoches. Ainsi, seul l'élément de fermeture serait endommagé et l'embase pourrait rester intacte. Par conséquent, la réparation de la boîte de protection 100, 200 est facilitée car il suffit de remplacer l'élément de fermeture 101, 201.

Le remplacement d'un élément de fermeture 101, 201 peut être également possible indépendamment de toute réparation. Par exemple, Si un utilisateur souhaite ajouter un équipement automobile nécessitant un fusible et/ou un relai électrique ou autre pièces électriques, l'élément de fermeture en place peut être remplacé par un élément de fermeture de forme différente afin d'augmenter le volume intérieur de la boîte et permettre le montage de fusibles et/ ou relais électriques ou autre pièces électriques additionnels.

L'invention porte également sur l'agencement du compartiment moteur à l'avant du véhicule automobile 3 comprenant une telle boîte de protection 100, 200. Avantageusement, l'élément de fermeture 101, 201 est disposé sensiblement selon un plan vertical et d'un côté de la boîte de protection 100, 200 faisant face au phare 40 comme cela est illustré sur les figures 8 et 11. L'élément de fermeture 101, 201 est disposé de sorte que lors d'un recul du phare vers l'arrière consécutivement à une collision, le phare heurte la boîte de protection au niveau de l'élément de fermeture. Ainsi, comme illustré sur la figure 9, tant que le recul du phare reste limité, seul le deuxième élément de fermeture est endommagé et l'embase reste intacte. Cet effet peut être combiné avec l'utilisation d'une résistance mécanique plus faible du deuxième élément de fermeture tel que décrit plus haut. Lorsqu'une plus faible quantité de fusibles et/ou relais électrique ou autres pièces électriques est requise, la boîte de protection peut être équipée du premier élément de fermeture. Cela permet de limiter les dimensions de la boîte de protection au volume nécessaire pour loger les fusibles et/ou relais électriques ou autres pièces électriques. L'espace entre la boîte de protection et le phare peut ainsi être augmenté. Dans une telle configuration, comme illustré sur la figure 12, un phare 40 déplacé dans une certaine limite vers l'arrière du véhicule consécutivement à un choc du véhicule ne rentre pas en contact avec la boîte de protection. La boîte de protection demeure donc intacte.

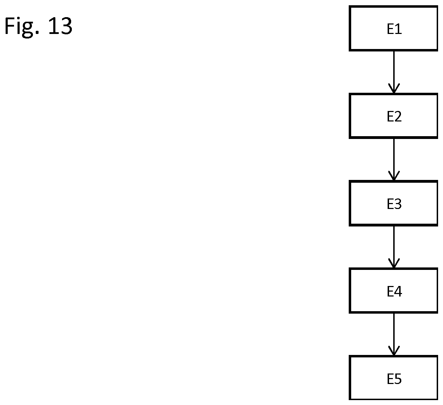

Enfin, l'invention porte aussi sur un procédé de fabrication d'une telle boîte de protection. Comme illustré sur la figure 13, le procédé de fabrication comprend les étapes E1, E2, E3, E4 et E5.
- Lors d'une première étape E1, on fabrique l'embase 4.
- Lors d'une deuxième étape E2, on fabrique le premier élément de fermeture 101.
- Lors d'une troisième étape E3, on fabrique le deuxième élément de fermeture 201.
- Lors d'une quatrième étape E4, on sélectionne un élément de fermeture 101, 201 parmi au moins le premier et le deuxième élément de fermeture 101, 201.
- Lors d'une cinquième étape E5, on fixe l'élément de fermeture 101, 201 sélectionné lors de la quatrième étape E4 sur l'embase 4 par actionnement du premier moyen de fixation 31 et éventuellement du deuxième moyen de fixation.

Optionnellement, le procédé de fabrication peut comprendre la fabrication d'un nombre quelconque d'éléments de fermeture de formes différentes les uns des autres. Lors de la quatrième étape E4, on sélectionne alors l'élément de fermeture le plus adapté en fonction de la quantité de fusibles et/ou relais électriques ou autres pièces électriques devant être installés et en fonction de l'agencement des organes environnant la boîte de protection dans le compartiment moteur. L'élément de fermeture peut être assemblé à l'embase 4 avec le couvercle 8 déjà positionné sur la partie contenante 6. Dans ce cas, les parois de l'embase 4 sont déformées pour permettre l'insertion de l'élément de fermeture. En variante, l'élément de fermeture peut être tout d'abord fixé sur la partie contenante 6 de la boîte de protection puis le couvercle peut être mis en place sur l'ensemble formé par la partie contenante 6 et l'élément de fermeture.

Grâce à l'invention, on dispose d'une boîte de protection pour fusibles et/ou relais électriques ou autres pièces électriques dont le volume est adapté à la quantité de fusibles et/ou relais électriques ou autres pièces électriques. L'encombrement de la boîte de protection est ainsi limité au juste nécessaire. Le risque d'endommagement de la boîte de protection consécutivement au déplacement d'un organe est optimisé. La quantité de matière et les coûts de fabrication sont donc optimisés. La boîte de protection ainsi formée est étanche et protège efficacement son contenu des projections liquides ou solides pouvant se produire dans un véhicule. En cas de collision du véhicule entrainant un déplacement relatif des organes, la boîte de protection peut être préservée grâce à son volume ajusté au volume nécessaire. A défaut, la boîte peut être facilement réparée en procédant uniquement au remplacement de l'élément de fermeture. En outre, il est également possible d'augmenter le volume de la boîte de protection dans le cadre d'un service après-vente en remplaçant uniquement l'élément de fermeture. Ainsi un nouvel équipement nécessitant l'ajout d'un fusible et/ou d'un relai électrique ou autre pièce électrique peut être facilement intégré au véhicule.

## Revendications

1. Procédé de fabrication d'une boîte de protection (100, 200) pour fusibles et/ou relais électriques ou autres pièces électriques (2) d'un véhicule automobile (3), comprenant:
- une étape (E1) de fourniture d'une embase (4) comprenant un ensemble de parois (5), une ouverture principale, et une ouverture auxiliaire (7) disposée dans un plan sensiblement perpendiculaire à un plan de l'ouverture principale ;
- une étape (E4) de sélection d'un élément de fermeture (101, 201),
**caractérisé en ce que** l'élément de fermeture (101, 201) comporte des parois d'épaisseur (e1) plus faible qu'une épaisseur (e2) des parois (5) de l'embase (4), ou comporte des encoches, de manière à présenter une résistance mécanique plus faible que l'embase (4), la sélection de l'élément de fermeture (101, 201) se faisant parmi au moins un premier élément de fermeture (101) et un deuxième élément de fermeture (201), le premier élément de fermeture (101) étant apte à obturer l'ouverture auxiliaire (7) pour former avec l'embase (4) une première boîte de protection (100) pour fusibles et/ou relais électriques ou autres pièces électriques (2), le deuxième élément de fermeture (201) étant apte à obturer l'ouverture auxiliaire (7) pour former avec l'embase (4) une deuxième boîte de protection (200) pour fusibles et/ou relais électriques ou autres pièces électriques (2) de forme différente de la première boîte de protection (100) ;
- une étape (E5) de fixation de l'élément de fermeture (101, 201) sélectionné sur l'embase (4).

2. Procédé de fabrication d'une boîte de protection (100, 200) selon la revendication précédente, **caractérisé en ce qu'**il comprend :
- une étape (E2) de fabrication du premier élément de fermeture (101), et
- une étape (E3) de fabrication du deuxième élément de fermeture (201).

3. Procédé de fabrication d'une boîte de protection (100, 200) selon l'une des revendications précédentes, **caractérisé en ce que** :
- l'embase (4) comprend un premier élément (11) d'un premier moyen de fixation (31) et, éventuellement, un premier élément (12) d'un deuxième moyen de fixation (34) ;
- le premier élément de fermeture (101) comprend un deuxième élément (102) du premier moyen de fixation (31) apte à coopérer avec le premier élément (11) du premier moyen de fixation (31) ;
- le deuxième élément de fermeture (201) comprend un troisième élément (202) du premier moyen de fixation (31) apte à coopérer avec le premier élément (11) du premier moyen de fixation (31) et/ou éventuellement un deuxième élément (204) du deuxième moyen de fixation (34) apte à coopérer avec le premier élément (12) du deuxième moyen de fixation (34) ;
- l'étape (E5) de fixation comprend la fixation de l'élément de fermeture (101, 201) sélectionné sur l'embase (4) au moyen du premier moyen de fixation (31) et/ou éventuellement du deuxième moyen de fixation.

4. Boîte de protection (100) pour fusibles et/ou relais électriques ou autres pièces électriques (2) d'un véhicule automobile (3), comprenant :
- un ensemble de parois (5) formant une embase (4), l'embase étant formée d'une partie contenante (6) munie d'une ouverture principale permettant d'accéder aux fusibles et/ou relais électrique ou autres pièces électriques et d'un couvercle (8) apte à obturer l'ouverture principale, l'embase (4) étant munie d'une ouverture auxiliaire (7) positionnée sur une face latérale de la boîte de protection (100), et d'un premier élément (11) d'un premier moyen de fixation (31),
- un élément de fermeture (101, 201) muni d'un deuxième élément (102, 202) du premier moyen de fixation (31) coopérant avec le premier élément (11) du premier moyen de fixation (31) pour obturer l'ouverture auxiliaire (7),
**caractérisé en ce que** l'élément de fermeture (101, 201) comporte des parois d'épaisseur (e1) plus faible qu'une épaisseur (e2) des parois (5) de l'embase (4), ou comporte des encoches, de manière à présenter une résistance mécanique plus faible que l'embase (4).

5. Boîte de protection (100) selon la revendication 4, **caractérisée en ce que** le premier moyen de fixation (31, 32, 33) comprend :
- au moins un clip de fixation (31) pour fixer l'élément de fermeture (101, 201) sur l'embase (4), notamment l'embase (4) comprenant un premier élément (11) du clip de fixation et l'élément de fermeture (101, 201) comprenant un deuxième élément (102, 202) du clip de fixation ; et/ou
- au moins une chicane (32, 33) composée d'un bord (103, 104) sur l'embase (4) ou respectivement sur l'élément de fermeture (101, 201) coopérant avec une rainure (9, 10) disposée sur l'élément de fixation (101, 201), respectivement sur l'embase (4).

6. Boîte de protection (100) selon l'une des revendications 4 à 5, **caractérisée en ce que** l'embase (4) comprend un premier élément (12) d'un deuxième moyen de fixation (34) apte à coopérer avec un deuxième élément (204) du deuxième moyen de fixation (34) disposé sur un deuxième élément de fermeture (201).

7. Boîte de protection (100, 200) selon l'une des revendications 4 à 6, **caractérisée en ce qu'**elle comprend un moyen de protection contre des projections extérieures disposé à une jointure entre l'embase (4) et l'élément de fermeture (101, 201), notamment **en ce que** l'embase (4) comprend une rainure (9, 10) à l'intérieur de laquelle est inséré un bord (103, 104) de l'élément de fermeture (101) pour former une chicane (32, 33) et/ou **en ce que** l'élément de fermeture (201) comprend une rainure (204) à l'intérieur de laquelle est inséré un rebord coudé (12) de l'embase (4) pour former une chicane (34).

8. Boîte de protection (200) selon l'une des revendications 4 à 7, **caractérisée en ce que** l'élément de fermeture (201) comprend deux parties distinctes (206, 207), notamment une première partie (206) comprenant une rainure (208) et une deuxième partie (207) comprenant un bord (209) inséré dans la rainure (208) de la première partie (206) pour former une chicane (210).

9. Boîte de protection (100, 200) selon l'une des revendications 4 à 8, **caractérisée en ce que** l'élément de fermeture (101, 201) comprend, sur une face tournée vers l'intérieur de la boîte de protection (100, 200), au moins un logement (105, 205) pour fixer une platine de fusible, notamment au moins un logement en forme de queue d'aronde.

10. Agencement d'un compartiment moteur à l'avant d'un véhicule automobile (3) comprenant une boîte de protection (100, 200) selon l'une des revendications 4 à 9 et un organe, notamment un phare (40), disposé à l'avant de la boîte de protection, **caractérisé en ce que** le premier élément de fermeture (101, 201) est disposé sensiblement selon un plan vertical et d'un côté de la boîte de protection (100, 200) faisant face à l'organe.

11. Véhicule automobile (3) comprenant une boîte de protection (100, 200) selon l'une des revendications 4 à 9 ou un agencement d'un compartiment moteur selon la revendication précédente.

## Patentansprüche

1. Verfahren zur Herstellung eines Schutzkastens (100, 200) für Sicherungen und/oder elektrische Relais oder andere elektrische Teile (2) eines Kraftfahrzeugs (3), umfassend:
- einen Schritt (E1) der Bereitstellung eines Grundkörpers (4), der eine Anordnung von Wänden (5), eine Hauptöffnung und eine Hilfsöffnung (7), die in einer zu einer Ebene der Hauptöffnung im Wesentlichen senkrechten Ebene angeordnet ist, umfasst;
- einen Schritt (E4) der Auswahl eines Verschlusselements (101, 201),
**dadurch gekennzeichnet, dass** das Verschlusselement (101, 201) Wände mit einer Dicke (e1) aufweist, die kleiner als eine Dicke (e2) der Wände (5) des Grundkörpers (4) ist, oder Aussparungen aufweist, so dass es eine geringere mechanische Festigkeit als der Grundkörper (4) aufweist, wobei die Auswahl des Verschlusselements (101, 201) aus wenigstens einem ersten Verschlusselement (101) und einem zweiten Verschlusselement (201) vorgenommen wird, wobei das erste Verschlusselement (101) geeignet ist, die Hilfsöffnung (7) zu verschließen, um mit dem Grundkörper (4) einen ersten Schutzkasten (100) für Sicherungen und/oder elektrische Relais oder andere elektrische Teile (2) zu bilden, wobei das zweite Verschlusselement (201) geeignet ist, die Hilfsöffnung (7) zu verschließen, um mit dem Grundkörper (4) einen zweiten Schutzkasten (200) für Sicherungen und/oder elektrische Relais oder andere elektrische Teile (2) mit einer von dem ersten Schutzkasten (100) verschiedenen Form zu bilden,
- einen Schritt (E5) der Befestigung des ausgewählten Verschlusselements (101, 201) am Grundkörper (4).

2. Verfahren zur Herstellung eines Schutzkastens (100, 200) nach dem vorhergehenden Anspruch, **dadurch gekennzeichnet, dass** es umfasst:
- einen Schritt (E2) der Herstellung des ersten Verschlusselements (101) und
- einen Schritt (E3) der Herstellung des zweiten Verschlusselements (201).

3. Verfahren zur Herstellung eines Schutzkastens (100, 200) nach einem der vorhergehenden Ansprüche, **dadurch gekennzeichnet, dass**:
- der Grundkörper (4) ein erstes Element (11) eines ersten Befestigungsmittels (31) und gegebenenfalls ein erstes Element (12) eines zweiten Befestigungsmittels (34) umfasst,
- das erste Verschlusselement (101) ein zweites Element (102) des ersten Befestigungsmittels (31) umfasst, das geeignet ist, mit dem ersten Element (11) des ersten Befestigungsmittels (31) zusammenzuwirken,
- das zweite Verschlusselement (201) ein drittes Element (202) des ersten Befestigungsmittels (31), das geeignet ist, mit dem ersten Element (11) des ersten Befestigungsmittels (31) zusammenzuwirken, und/oder gegebenenfalls ein zweites Element (204) des zweiten Befestigungsmittels (34), das geeignet ist, mit dem ersten Element (12) des zweiten Befestigungsmittels (34) zusammenzuwirken, umfasst,
- der Schritt (E5) der Befestigung die Befestigung des ausgewählten Verschlusselements (101, 201) am Grundkörper (4) mittels des ersten Befestigungsmittels (31) und/oder gegebenenfalls des zweiten Befestigungsmittels umfasst.

4. Schutzkasten (100) für Sicherungen und/oder elektrische Relais oder andere elektrische Teile (2) eines Kraftfahrzeugs (3), umfassend:
- eine Anordnung von Wänden (5), die einen Grundkörper (4) bildet, wobei der Grundkörper von einem Aufnahmeteil (6), der mit einer Hauptöffnung versehen ist, die den Zugang zu den Sicherungen und/oder elektrischen Relais oder anderen elektrischen Teilen ermöglicht, und von einem Deckel (8), der geeignet ist, die Hauptöffnung zu verschließen, gebildet wird, wobei der Grundkörper (4) mit einer Hilfsöffnung (7), die an einer Seitenfläche des Schutzkastens (100) positioniert ist, und mit einem ersten Element (11) eines ersten Befestigungsmittels (31) versehen ist,
- ein Verschlusselement (101, 201), das mit einem zweiten Element (102, 202) des ersten Befestigungsmittels (31) versehen ist, das mit dem ersten Element (11) des ersten Befestigungsmittels (31) zusammenwirkt, um die Hilfsöffnung (7) zu verschließen,
**dadurch gekennzeichnet, dass** das Verschlusselement (101, 201) Wände mit einer Dicke (e1) aufweist, die kleiner als eine Dicke (e2) der Wände (5) des Grundkörpers (4) ist, oder Aussparungen aufweist, so dass es eine geringere mechanische Festigkeit als der Grundkörper (4) aufweist.

5. Schutzkasten (100) nach Anspruch 4, **dadurch gekennzeichnet, dass** das erste Befestigungsmittel (31, 32, 33) umfasst;
- wenigstens einen Befestigungsclip (31) zum Befestigen des Verschlusselements (101, 201) am Grundkörper (4), wobei insbesondere der Grundkörper (4) ein erstes Element (11) des Befestigungsclips umfasst und das Verschlusselement (101, 201) ein zweites Element (102, 202) des Befestigungsclips umfasst; und/oder
- wenigstens eine Sperre (32, 33), die aus einem Rand (103, 104) am Grundkörper (4) bzw. am Verschlusselement (101, 201) besteht, der mit einer Nut (9, 10) zusammenwirkt, die am Verschlusselement (101, 201) bzw. am Grundkörper (4) angeordnet ist.

6. Schutzkasten (100) nach einem der Ansprüche 4 bis 5, **dadurch gekennzeichnet, dass** der Grundkörper (4) ein erstes Element (12) eines zweiten Befestigungsmittels (34) umfasst, das geeignet ist, mit einem zweiten Element (204) des zweiten Befestigungsmittels (34) zusammenzuwirken, das an einem zweiten Verschlusselement (201) angeordnet ist.

7. Schutzkasten (100, 200) nach einem der Ansprüche 4 bis 6, **dadurch gekennzeichnet, dass** er ein Mittel zum Schutz vor Spritzern von außen umfasst, das an einer Verbindungsstelle zwischen dem Grundkörper (4) und dem Verschlusselement (101, 201) angeordnet ist, insbesondere dadurch, dass der Grundkörper (4) eine Nut (9, 10) umfasst, in die hinein ein Rand (103, 104) des Verschlusselements (101) eingefügt ist, um eine Sperre (32, 33) zu bilden, und/oder dadurch, dass das Verschlusselement (201) eine Nut (204) umfasst, in die hinein eine abgewinkelte Randleiste (12) des Grundkörpers (4) eingefügt ist, um eine Sperre (34) zu bilden.

8. Schutzkasten (200) nach einem der Ansprüche 4 bis 7, **dadurch gekennzeichnet, dass** das Verschlusselement (201) zwei verschiedene Teile (206, 207) umfasst, nämlich einen ersten Teil (206), der eine Nut (208) umfasst, und einen zweiten Teil (207), der einen Rand (209) umfasst, der in die Nut (208) des ersten Teils (206) eingefügt ist, um eine Sperre (210) zu bilden.

9. Schutzkasten (100, 200) nach einem der Ansprüche 4 bis 8, **dadurch gekennzeichnet, dass** das Verschlusselement (101, 201) auf einer dem Inneren des Schutzkastens (100, 200) zugewandten Seite wenigstens eine Aufnahme (105, 205) zum Befestigen einer Sicherungsplatine umfasst, insbesondere wenigstens eine schwalbenschwanzförmige Aufnahme.

10. Anordnung eines Motorraums vorn an einem Kraftfahrzeug (3), welche einen Schutzkasten (100, 200) nach einem der Ansprüche 4 bis 9 und ein vor dem Schutzkasten angeordnetes Organ, insbesondere einen Scheinwerfer (40), umfasst, **dadurch gekennzeichnet, dass** das erste Verschlusselement (101, 201) im Wesentlichen in einer vertikalen Ebene und auf einer Seite des Schutzkastens (100, 200), die dem Organ zugewandt ist, angeordnet ist.

11. Kraftfahrzeug (3), welches einen Schutzkasten (100, 200) nach einem der Ansprüche 4 bis 9 oder eine Anordnung eines Motorraums nach dem vorhergehenden Anspruch umfasst.

## Claims

1. Method for manufacturing a protective case (100, 200) for electrical relays and/or fuses or other electrical components (2) of a motor vehicle (3), comprising:
- a step (E1) of providing a base (4) comprising a set of walls (5), a main opening, and a secondary opening (7) disposed in a plane substantially perpendicular to a plane of the main opening;
- a step (E4) of selecting a closure element (101, 201),
**characterized in that** the closure element (101, 201) has walls with a thickness (e1) less than a thickness (e2) of the walls (5) of the base (4), or has notches, so as to have lower mechanical strength than the base (4), the closure element (101, 201) being selected from at least one first closure element (101) and one second closure element (201), the first closure element (101) being able to close off the secondary opening (7) in order to form with the base (4) a first protective case (100) for electrical relays and/or fuses or other electrical components (2), the second closure element (201) being able to close off the secondary opening (7) in order to form with the base (4) a second protective case (200) for electrical relays and/or fuses or other electrical components (2) with a different shape from the first protective case (100) ;
- a step (E5) of fastening the selected closure element (101, 201) to the base (4).

2. Method for manufacturing a protective case (100, 200) according to the preceding claim, **characterized in that** it comprises:
- a step (E2) of manufacturing the first closure element (101), and
- a step (E3) of manufacturing the second closure element (201).

3. Method for manufacturing a protective case (100, 200) according to either of the preceding claims, **characterized in that**:
- the base (4) comprises a first element (11) of a first fastening means (31) and, optionally, a first element (12) of a second fastening means (34);
- the first closure element (101) comprises a second element (102) of the first fastening means (31) that is able to cooperate with the first element (11) of the first fastening means (31);
- the second closure element (201) comprises a third element (202) of the first fastening means (31) that is able to cooperate with the first element (11) of the first fastening means (31) and/or optionally a second element (204) of the second fastening means (34) that is able to cooperate with the first element (12) of the second fastening means (34);
- the fastening step (E5) comprises the fastening of the selected closure element (101, 201) to the base (4) by means of the first fastening means (31) and/or optionally the second fastening means.

4. Protective case (100) for electrical relays and/or fuses or other electrical components (2) of a motor vehicle (3), comprising:
- a set of walls (5) forming a base (4), the base being formed by a containing part (6) provided with a main opening for accessing the electrical relays and/or fuses or other electrical components and with a cover (8) that is able to close off the main opening, the base (4) being provided with a secondary opening (7) positioned on a side face of the protective case (100), and with a first element (11) of a first fastening means (31),
- a closure element (101, 201) provided with a second element (102, 202) of the first fastening means (31) cooperating with the first element (11) of the first fastening means (31) in order to close off the secondary opening (7),
**characterized in that** the closure element (101, 201) has walls with a thickness (e1) less than a thickness (e2) of the walls (5) of the base (4), or has notches, so as to have lower mechanical strength than the base (4).

5. Protective case (100) according to Claim 4, **characterized in that** the first fastening means (31, 32, 33) comprises:
- at least one fastening clip (31) for fastening the closure element (101, 201) to the base (4), in particular the base (4) comprising a first element (11) of the fastening clip and the closure element (101, 201) comprising a second element (102, 202) of the fastening clip; and/or
- at least one baffle (32, 33) made up of an edge (103, 104) on the base (4) or on the closure element (101, 201), respectively, cooperating with a groove (9, 10) disposed in the fastening element (101, 201) or in the base (4), respectively.

6. Protective case (100) according to either of Claims 4 and 5, **characterized in that** the base (4) comprises a first element (12) of a second fastening means (34) that is able to cooperate with a second element (204) of the second fastening means (34) disposed on a second closure element (201).

7. Protective case (100, 200) according to one of Claims 4 to 6, **characterized in that** it comprises a means for protecting against exterior projections located at a joint between the base (4) and the closure element (101, 201), in particular **in that** the base (4) comprises a groove (9, 10) into which an edge (103, 104) of the closure element (101) is inserted in order to form a baffle (32, 33), and/or in that the closure element (201) comprises a groove (204) into which an angled lip (12) of the base (4) is inserted in order to form a baffle (34).

8. Protective case (200) according to one of Claims 4 to 7, **characterized in that** the closure element (201) comprises two separate parts (206, 207), in particular a first part (206) comprising a groove (208) and a second part (207) comprising an edge (209) inserted into the groove (208) in the first part (206) in order to form a baffle (210).

9. Protective case (100, 200) according to one of Claims 4 to 8, **characterized in that** the closure element (101, 201) comprises, on a face directed towards the inside of the protective case (100, 200), at least one housing (105, 205) for fastening a fuse board, in particular at least one housing in the form of a dovetail.

10. Arrangement of an engine compartment at the front of a motor vehicle (3) comprising a protective case (100, 200) according to one of Claims 4 to 9 and a member, notably a headlight (40), disposed at the front of the protective case, **characterized in that** the first closure element (101, 201) is disposed substantially in a vertical plane and on a side of the protective case (100, 200) facing the member.

11. Motor vehicle (3) comprising a protective case (100, 200) according to one of Claims 4 to 9 or an arrangement of an engine compartment according to the preceding claim.
